# EUROPEAN PATENT SPECIFICATION

(11) **EP 3 497 948 B1**
(45) Date of publication and mention of the grant of the patent: **11.08.2021**
(21) Application number: 16912396.5
(22) Date of filing: 12.08.2016
(51) Int. Cl.: H04W 4/06, H04W 52/02

(54) **SELECTIVE RECEPTION OF CELL BROADCAST SERVICE**
SELEKTIVER EMPFANG VON ZELLRUNDFUNKDIENST
RÉCEPTION SÉLECTIVE DE SERVICE DE DIFFUSION DE CELLULE

(43) Date of publication of application: 19.06.2019
(73) Proprietor: Microsoft Technology Licensing, LLC, Redmond, WA 98052 (US)
(72) Inventor: LIU, Liyuan, Beijing 100080 (CN); LI, Jian, Beijing 100080 (CN); BRINK, Anton, Beijing 100080 (CN)
(74) Representative: CMS Cameron McKenna Nabarro Olswang LLP
(86) International application number: PCT/CN2016/094973
(87) International publication number: WO 2018/027941

(56) References cited:
- EP-A1- 2 962 480
- CN-A- 104 054 361
- US-A1- 2011 105 075
- US-A1- 2011 201 365
- US-A1- 2013 265 928
- US-A1- 2014 179 255
- US-A1- 2014 348 072
- "Digital cellular telecommunications system (Phase 2+); Short Message Service Cell Broadcast (SMSCB) support on the mobile radio interface (3GPP TS 44.012 version 10.0.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP GERAN 2, no. V10.0.0, 1 April 2011 (2011-04-01), XP014065418,

## Description

### BACKGROUND

Cell Broadcast Service (CBS) is designed for simultaneous delivery to multiple users in a specified area, and is a technology that allows cell operators to broadcast messages to terminal devices in cell(s). CBS messages may contain information related to traffic, weather, general advertisements, emergency related messages, or the like. The geographical scope of a CBS message may be one cell within a public land mobile network (PLMN), a group of cells in a PLMN, or the entire PLMN A terminal device in the PLMN may receive the CBS message broadcasted from a network device. For a terminal device, the CBS message can be received when a CBS function on the device is enabled. In other words, unless the CBS function is enabled, the terminal device could not receive any CBS message. However, if the CBS function is enabled for a long time period, power consumption of the terminal device would be very high.
EP 2962480 A1 describes a UE side Broadcast/Multicast Control (BMC) protocol layer that determines the Cell Broadcast Service (CBS) messages (and their repetitions) which a UE shall read or ignore in a succeeding CBS schedule period.
"Digital cellular telecommunications system (Phase 2+); Short Message Service Cell Broadcast (SMSCB) support on the mobile radio interface (3GPP TS 44.012 version 10.0.0 Release 10)" describes a technical specification by the European Telecommunications Standards Institute of 1 April 2011.
US 2011/105075 A1 describes a method of receiving or transmitting an updated warning message in a wireless communication system.
US 2014/179255 A1 describes techniques for power conservation in emergency broadcast message reception.

### SUMMARY

According to an aspect of the present invention there is provided a method, device and program as defined in the accompanying claims.

Generally speaking, a new approach for receiving the CBS message is proposed herein. In accordance with implementations of the subject matter described herein, upon receipt of a CBS message from a network device, a terminal device will determine an attribute of the CBS message. Then the terminal device will determine a policy for receiving a further CBS message based on the determined attribute. That is, the policy is determined through a self-learning process performed on the received CBS message(s). In this way, the power consumption of the terminal device for receiving the CBS messages can be reduced. As a result, the battery life of the terminal device can be guaranteed, even when transmission of CBS messages is frequent.

It is to be understood that the Summary is not intended to identify key or essential features of implementations of the subject matter described herein, nor is it intended to be used to limit the scope of the subject matter described herein. Other features of the subject matter described herein will become easily comprehensible through the description below.

### BRIEF DESCRIPTION OF THE DRAWINGS

The details of one or more implementations of the subject matter described herein are set forth in the accompanying drawings and the description below. Other features, aspects, and advantages of the disclosure will become apparent from the description, the drawings, and the claims, wherein:
Fig. 1 is a schematic diagram illustrating an environment 100 in which example implementations of the subject matter described herein can be implemented;
Fig. 2 is a flowchart illustrating a method 200 for receiving CBS messages in accordance with an example implementation of the subject matter described herein;
Fig. 3 is a flowchart illustrating another method 300 for receiving CBS messages in accordance with an example implementation of the subject matter described herein;
Fig. 4 is a flowchart illustrating another method 400 for receiving CBS messages in accordance with an example implementation of the subject matter described herein;
Fig. 5 is a flowchart illustrating another method 500 for receiving CBS messages in accordance with an example implementation of the subject matter described herein; and
Fig. 6 is a block diagram of a device suitable for implementing one or more implementations of the subject matter described herein.

Throughout the figures, same or similar reference numbers will always indicate same or similar elements.

### DETAILED DESCRIPTION

Principle of the subject matter described herein will now be described with reference to some example implementations. It is to be understood that these implementations are described only for the purpose of illustration and help those skilled in the art to understand and implement the subject matter described herein, without suggesting any limitations as to the scope of the disclosure. The disclosure described herein can be implemented in various manners other than the ones describe below.

As used herein, the term "include" and its variants are to be read as open terms that mean "include, but is not limited to". The term "based on" is to be read as "based at least in part on". The term "a" is to be read as "one or more" unless otherwise specified. The term "one implementation" and "an implementation" are to be read as "at least one implementation". The term "another implementation" is to be read as "at least one other implementation". Moreover, it is to be understood that in the context of the subject matter described herein, the terms "first", "second" and the like are used to indicate individual elements or components, without suggesting any limitation as to the order of these elements. Further, a first element may or may not be the same as a second element. Other definitions, explicit and implicit, may be included below.

Conventionally, different operators have various configurations for supporting CBS in their service networks, for example, 2G, 3G and 4G networks. For a terminal device in these networks, enabling the CBS function to receive CBS messages would increase quite a lot of power consumption. This may negatively impact the stand-by time of the terminal device. Some terminal devices may have user interface (UI) switch to enable/disable the CBS function. However, such operation would increase the complexity of the UI and hence brings more steps for user to interact with the terminal devices. Thus, the traditional schemes for reception of CBS messages would not be a suitable solution for receiving CBS messages while guaranteeing the stand-by time of a terminal device.

In order to at least partially solve the above and other potential problems, a new method and device for receiving CBS messages are provided herein. According to implementations of the subject matter described herein, upon receiving a CBS message, a terminal device determines an attribute of the CBS message, and then determines a policy for receiving a further CBS message based on the attribute. As such, a self-learning process is performed before receiving the further CBS message.

Through the self-learning process, the terminal device may receive CBS messages according to the policy, instead of receiving the CBS messages all the time without discretion. As a result, the power consumption of the terminal device for receiving the CBS messages is reduced. The battery life of the terminal device thus can be guaranteed. Some example implementations will now be described.

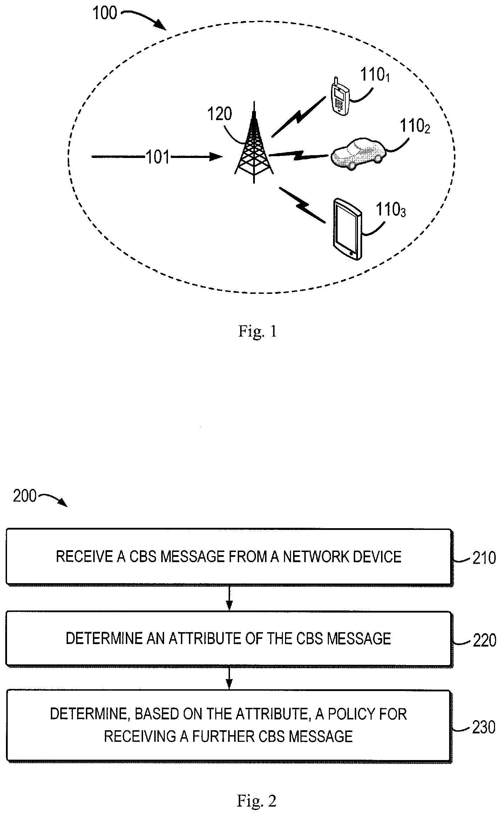

Reference is first made to Fig. 1 which shows a block diagram illustrating an environment 100 in which example implementations of the subject matter described herein can be implemented. For the sake of discussions, some example implementations of the subject matter described herein will be described with reference to the environment 100. However, it is to be understood that such an environment is described merely for the purpose of illustration, without suggesting any limitations as to the scope of the subject matter described herein.

As shown, the environment 100 includes terminal devices 110₁, 110₂, and 110₃ (collectively referred to as "terminal device 110") and a network device 120. It is to be understood that although three terminal devices 110 are shown, the environment 100 may include any suitable number of devices. Likewise, the environment 100 may include two or more network devices 120.

A network device refers to a device in a communication network, from which a terminal device may receive services. The network device may be a base station (BS), an access point (AP), a server or any other suitable device in the communication network. The BS may be, for example, a node B (NodeB or NB), an evolved NodeB (eNodeB or eNB), a Remote Radio Unit (RRU), a radio header (RH), a remote radio head (RRH), a relay, a low power node such as a femto, a pico, and so forth.

A terminal device refers to any end device that can communicate with the network device and receive services from communication a network. By way of example and not limitation, the terminal device refers to a mobile terminal, user equipment (UE), or other suitable device. The UE may be, for example, a Subscriber Station (SS), a Portable Subscriber Station, a Mobile Station (MS), or an Access Terminal (AT). The terminal device may include, but not limited to, a mobile phone, a cellular phone, a smart phone, a laptop computer, a tablet, a personal digital assistant (PDA), a vehicle, and the like.

As shown in Fig. 1, a CBS message(s) 101 may be generated by a Cell Broadcast Center (CBC), for example. The CBS message may contain information related to one or more of traffic, weather, general advertisements, emergency related messages, and the like. The CBC sends the CBS message 101 to the network device 120. The network device 120 broadcasts the CBS message 101 to terminal devices 110 by a certain time interval. In accordance with embodiments of the subject matter described herein, upon receipt of a CBS message from the network device 120, the terminal device 110 determines an attribute of the received CBS message. Then, the terminal device 110 determines a policy for receiving further CBS message based on the attribute of the previously received CBS message.

The functionalities and operations of the terminal device 110 are described with reference to Fig. 2, which is a flowchart illustrating a method 200 for receiving CBS messages in accordance with an example implementation of the subject matter described herein. In other word, the method 200 is implemented at the terminal device 110.

As shown, at 210, the terminal device 110 receives a CBS message from the network device 120. According to implementations of the subject matter described herein, the CBS message may be transmitted from the network device 120 to the terminal device 110 in a variety of ways. For example, in some implementations, the CBS message may be received from the network device 120 via a Broadcast and Multicast Control (BMC) protocol layer over a Common Traffic Channel (CTCH) logical channel. The CBS message may be received on the CTCH using Discontinuous Reception (DRX). It is to be understood that the above example is only discussed for illustration rather than limitation. There may be several other implementations for the terminal device 110 to receive the CBS message.

At 220, an attribute of the CBS message is determined. The attribute of a CBS message indicates characteristics of the CBS message, for example, a type of the CBS message, content of the CBS message, an event carried by the CBS message, a time interval for receiving a subsequent duplicate of the CBS message, broadcast times of the CBS message and so on.

In some implementations, at 220, the terminal device 110 may determine the type of the CBS message. The type may indicate that the CBS message is mandatory, optional, or advised. Thus, the terminal device may determine to receive the mandatory CBS message and optionally receive the other types, like "optional" or "advised."

Alternatively, in some implementations, at 220, the terminal device 110 may identify a broadcast event carried by the CBS message, which may relate to traffic, weather, general advertisements, emergency, and so on. The broadcast event may be identified in a variety of ways. In some implementations, the terminal device 110 may extract content from the CBS message and identify the broadcast event based on the extracted content.

In another implementation, at 220, the terminal device 110 may determine a time interval from the CBS message. The time interval defines a period of time for receiving a subsequent duplicate of the CBS message. In one example, the CBS message may include a setting of a timer that will expire after the period of time defined by the time interval escapes.

At 230, a policy for receiving a further CBS message is determined based on the attribute. The further CBS message may be a CBS message after receiving the CBS message at 210 (also referred to as the "received CBS message") for a certain period of time. The policy defines a set of rules for receiving the further CBS message and may be determined in a variety of ways.

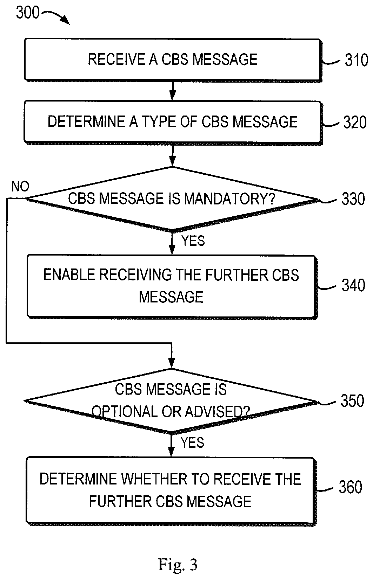

In some implementations, the terminal device 110 may determine the type of the received CBS message. If the type of the received CBS message is mandatory, the terminal device 110 may determine a policy which enables the terminal device to keep receiving the further CBS message. On the other hand, if the type of the received CBS message is optional or advised, the terminal device 110 may determine whether to receive the further CBS message depending on one or more relevant factors. For example, the determination may be made based on content in the CBS message, a power consumption of the terminal device, a preference setting of the terminal device, and/or the like. Example implementations in this regard will be discussed with respect to Fig. 3.

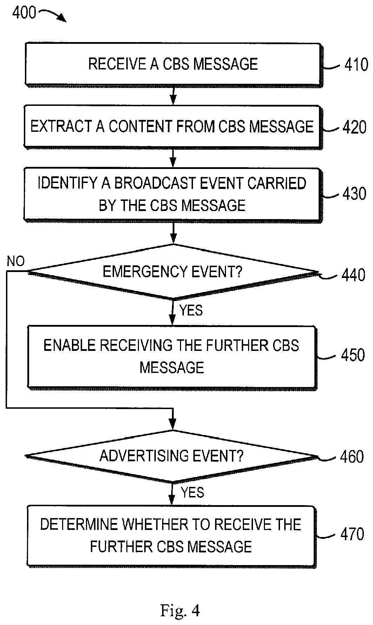

In those implementations where the broadcast event carried by the received CBS message is identified at 220, the terminal device 110 may then determine the policy based on the broadcast event at 230. For instance, if the terminal device 110 identifies that the broadcast event is an emergency event, such as disaster warning, the received CBS message can be determined as being very important. In this case, it is possible to deduce that the further CBS message is also of high importance. Thus, the terminal device 110 may determine a policy to enable the terminal device to receive the further CBS message. On the other hand, if the broadcast event is an advertising event, the terminal device 110 may determine that the received CBS event is of less importance and define a rule on whether to receive the further CBS message, for example, according to a type of the CBS message, a power consumption of the terminal device, a preference setting of the terminal device and so on. Example implementations in this regard will be discussed with respect to Fig. 4.

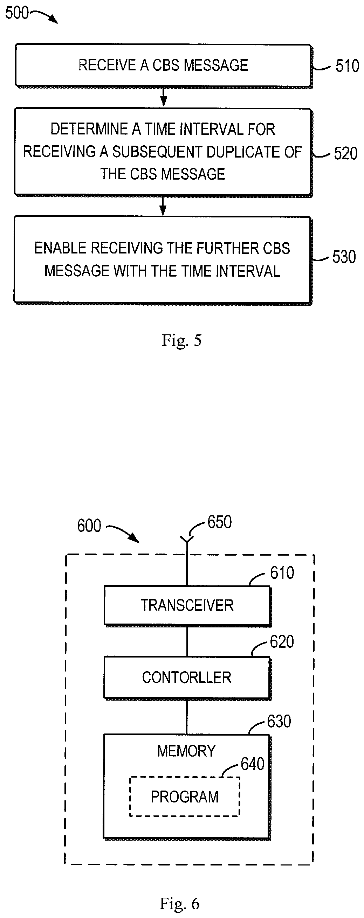

Alternatively, or in addition, in those implementations where a time interval for receiving a subsequent duplicate of the CBS message is determined at 220, the terminal device 110 may enable the further CBS message to be received according to the time interval. For example, the terminal device 110 may receive the further CBS message immediately after the time interval, or may determine a time point for receiving the further CBS message based on the time interval. Example implementations in this regard will be discussed with respect to Fig. 5.

Now some example implementations of the method 200 will be described with reference to Figs. 3-5. It is to be understood that these implementations can be embodied at the terminal device 110 separately or in combination.

Fig. 3 is a flowchart illustrating another method 300 for receiving CBS messages in accordance with an example implementation of the subject matter described herein. At 310, the terminal device 110 receives a CBS message from the network device 120. Then, the terminal device 120 determines the type of the CBS message at 320. For instance, the terminal device 120 may determine whether the type of the CBS message is mandatory, optional, or advised, as described above. A mandatory CBS message refers to a CBS message required to be received without any limitation, such as emergency notifications, disaster warnings, fire alarms, and so on. An optional CBS message refers to a CBS message which is optional for a terminal device to receive, such as advertisement. An advised CBS message refers to a CBS message recommended to be received, such as conference notifications, deal information of an operator, and the like.

At 330, it is determined whether the type of the CBS message is mandatory. In some implementations, the CBS message may include information of its type in a portion of the CBS message, for example, in a header of the CBS message. In some alternative implementations, the information of the type may be included in a separate message transmitted after, before or in parallel with the CBS message. Thus, the terminal device 110 may obtain the information of the type of the CBS message therefrom.

If the type of the CBS message is determined as mandatory, at 340, the terminal device 110 may be enabled to receive the further CBS message. Otherwise, it is further determined whether the type of the CBS message is optional or advised at 350. If the type of the CBS message is determined as optional or advised, at 370, the terminal device 120 may determine whether to receive the further CBS message based on relevant factors. Examples of such factors include, but are not limited to, content in the CBS message, a power consumption of the terminal device, a preference setting of the terminal device, or the like, or any combination thereof.

For example, if the content in the CBS message shows that the CBS message just carries advertisement or weather broadcast, the terminal device 110 may decide not to receive the further CBS message to avoid disturbance. Alternatively, or in addition, if the power consumption of the terminal device in a past few hours is high and the remaining power is relatively low, the terminal device 110 may decide not to receive the further CBS message to save power. If there is a preference setting of the terminal device which requires receiving optional CBS messages and discarding advised CBS messages, the terminal device 110 may receive the further CBS message that is optional and does not receive any further CBS message that is advised.

In this way, the terminal device 110 may selectively omit some further CBS messages if the type of the received CBS message is optional or advised, instead of receiving all of them without differentiation. As such, the power consumption of the terminal device can be reduced efficiently.

It is to be understood that although the types are described as mandatory, optional and advised in the above implementations, this is merely for the purpose of illustration without suggesting any limitation as to the scope of the subject matter described herein. In alternative implementations, other types of CBS messages are also applicable.

Fig. 4 is a flowchart illustrating another method 400 for receiving CBS messages in accordance with an example implementation of the subject matter described herein. It is to be understood that the method 400, which may be performed by the terminal device 110 as shown in Fig. 1, can be considered as an example implementation of the method 200.

At 410, the terminal device 110 receives a CBS message from the network device 120. At 420, the content is extracted from the CBS message. For example, in some implementations, it is possible to extract from the CBS message one or more keywords of the broadcast event, an abstract of the broadcast event, and so on.

At 430, a broadcast event carried by the CBS message is identified based on the extracted content. For example, in some embodiments, if the content contains given keywords like "sale," "promotions" or the like, it is possible to determine that the broadcast event carried by the received CBS message is an advertising event. If the content contains given keywords like "fire," "earthquake," "disaster warning" or the like, the broadcast event carried by the received CBS message can be determined as an emergency event. In addition to or instead of the keyword matching, the terminal device 110 may perform semantic analysis on the extracted content to the meaning of the received CBS message. Any suitable technologies for semantic analysis can be applied, either currently known or to be developed in the future.

At 440, it is determined whether the broadcast event is an emergency event. If so, the terminal device 110 may determine that the further CBS message may be also related to an emergency event and may be very important. Then, at 450, a policy may be determined to enable the terminal device 110 to receive the further CBS message.

If the broadcast event is not an emergency event, at 460, it is further determined whether the broadcast event is an advertising event. If so, the terminal device 110 may determine whether to receive the further CBS message at 470. The determination at 470 may be made based on, for example, at least one of the followings: a type of the CBS message, a power consumption of the terminal device, a preference setting of the terminal device, or the like.

For example, if the type of the CBS message is optional, the terminal device 110 may decide not to receive further CBS messages, thereby saving energy. As another example, if the power consumption of the terminal device in a past few hours is high and the remaining power is relatively low, the terminal device 110 may decide not to receive the further CBS message to save power. Alternatively, or in addition, if there is a preference setting of the terminal device requires receiving all CBS messages carrying an advertising event, the terminal device 110 may receive the further CBS message that probably carries an advertising event.

In this way, the terminal device 110 may selectively omit some further CBS messages if the content of the received CBS message carries an advertising event, instead of receiving all of them without differentiation. As such, the power consumption of the terminal device can be reduced efficiently.

Fig. 5 is a flowchart illustrating another method 500 for receiving CBS messages in accordance with an example implementation of the subject matter described herein. It is to be understood that the method 500, which may be performed by the terminal device 110 as shown in Fig. 1, can be considered as an example implementation of the method 200.

At 510, the terminal device 110 receives a CBS message from the network device 120. Then, at 520, the terminal device 110 determines a time interval for receiving a subsequent duplicate of the CBS message. It would be appreciated that CBS messages such as weather broadcast messages are often broadcasted periodically. In other words, a plurality of duplicates of the CBS message will be transmitted from the network device 120. In some implementations, the information about the time point for transmitting a further duplicate(s) of the CBS message is contained in a header of the current duplicate of the CBS message. In such implementations, upon receipt of the CBS message, the terminal device 110 may directly extract the information about the time point from the header of the CBS message, and then determine the time interval between the time point for transmitting the current duplicate and the time point for transmitting the subsequent duplicate.

It is to be understood that the above example is described for discussion, rather than limitation. In some implementations, information about the time interval may be included in a separate message other than the CBS message.

In some implementations, the terminal device 110 may adaptively adjust the length of the time interval for different types of CBS messages. For instance, if the type of the CBS message is mandatory, the terminal device 110 may assign the time interval with a length below a predetermined threshold. If the type of the CBS message is optional or advised, the terminal device 110 may determine the time interval with the length exceeding a predetermined threshold. Such a predetermined threshold may be set in several ways, for example, according to system requirements, experimental values, and so on. As such, the mandatory CBS message may have a relatively short time interval, for example, while the optional or advised CBS message may have a relatively long time interval. Only for the purpose of illustration, if the time interval that is extracted from an optional CBS message is 1ms, the terminal device may determine that it is of relatively low importance and hence adjust the time interval to 5ms, for example.

At 530, the terminal device 110 is enabled to receive the further CBS message according to the time interval. In some implementations, the terminal device 110 may receive the further CBS message immediately after the time interval. Alternatively, the terminal device 110 determines a period of time based on the time interval, for example, by adding a predetermined or dynamic offset, and receives the further CBS message upon escape of the period of time.

In this way, some less important CBS messages may be omitted by the terminal device 110. As a result, power consumption of the terminal device can be reduced and the batter life of the terminal device can be lengthened.

It is to be understood that implementations described above, such as the methods 300, 400 and 500, are only example implementations. Various modifications and/or variations can be made within the scope of the subject matter described herein. As an example, in the method 300 as shown in Fig. 3, after determining whether the CBS message is not mandatory at 330, it is possible to directly determine whether to receive the further CBS message at 360. That is, only the mandatory CBS message can be received without any limitation, and any other types of CBS messages have to be made a further judgment.

Fig. 6 is a block diagram of a device 600 suitable for implementing one or more implementations of the subject matter described herein. For example, the device 600 may function as the terminal device 110 as discussed above with reference to Fig. 1. Description of the device 600 is not intended to suggest any limitation as to scope of use or functionality of the subject matter described herein, as various implementations may be implemented in diverse general-purpose or special-purpose environments.

As shown, the device 600 includes a controller 620 and a memory 630. The controller 620 may be a real or a virtual processor that is capable of executing a program or computer-executable instructions 640 stored in the memory 630. The memory 630 may be volatile memory (e.g., registers, cache, RAM), non-volatile memory (e.g., ROM, EEPROM, flash memory), or some combination thereof.

In the example shown in Fig. 6, the device 600 further includes a transceiver 610. The transceiver 610 may be configured by the controller 620 to perform communications with other one or more devices, for example, via an antenna(s) or an antenna array(s) 650. In some implementations, the controller 620 may be configured by the program 640 stored in the memory 630 to work with the transceiver 610 to carry out the methods 200, 300, 400, and/or 500 as described above.

Additionally, functionality of the components of the device 600 may be implemented in a single computing machine, for example, a single mobile phone, or in multiple computing machines that are able to communicate over communication connections, for example, a cloud system. The device 600 may operate in an environment (for example, the environment 100) of a communication system following any suitable wireless communication standards, such as LTE-Advanced (LTE-A), LTE, Wideband Code Division Multiple Access (WCDMA), High-Speed Packet Access (HSPA), and so on. Furthermore, the communications between devices in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future.

For the purpose of illustrating the subject matter described herein, some specific implementations thereof have been described above. Through the self-learning process, the terminal device may receive CBS messages according to the policy, instead of receiving them without discretion. As a result, the power consumption of the terminal device for receiving the CBS messages can be reduced.

Now only for the purpose of illustration, some example implemented will be listed below.

The subject matter described herein may be embodied as a method implemented at a terminal device. The method comprises receiving a Cell Broadcast Service (CBS) message from a network device; determining an attribute of the CBS message; and determining, based on the attribute, a policy for receiving a further CBS message.

In some implementations, the determining an attribute of the CBS message comprises: determining a type of the CBS message, the type indicating that the CBS message is mandatory, optional, or advised. In some implementations, the determining a policy for receiving a further CBS message comprises: in response to the type indicating that the CBS message is mandatory, enabling the terminal device to receive the further CBS message; and in response to the type indicating that the CBS message is optional or advised, determining whether to receive the further CBS message based on at least one of the following: content in the CBS message, a power consumption of the terminal device, or a preference setting of the terminal device.

In some implementations, the determining an attribute of the CBS message comprises: extracting content from the CBS message; and identifying a broadcast event carried by the CBS message based on the extracted content. In some implementations, the determining a policy for receiving a further CBS message comprises: in response to the broadcast event being an emergency event, enabling the terminal device to receive the further CBS message; and in response to the broadcast event being an advertising event, determining whether to receive the further CBS message based on at least one of the following: a type of the CBS message, a power consumption of the terminal device, and a preference setting of the terminal device.

In some implementations, the determining an attribute of the CBS message comprises: determining a time interval for receiving a subsequent duplicate of the CBS message. In some implementations, the determining a time interval for receiving a subsequent duplicate of the CBS message comprises: in response to that the CBS message is mandatory, determining the time interval with a length below a predetermined threshold; and in response to that the CBS message is optional or advised, determining the time interval with the length exceeding a predetermined threshold. In some implementations, the determining a policy for receiving a further CBS message comprises: enabling the terminal device to receive the further CBS message according to the time interval.

The subject matter described herein can be also embodied as a terminal device. The terminal device comprises: a receiver configured to receive a Cell Broadcast Service (CBS) message from a network device; and a controller configured to: determine an attribute of the CBS message; and determine, based on the attribute, a policy for receiving a further CBS message.

In some implementations, the controller is configured to determine a type of the CBS message as the attribute of the CBS message, the type indicating that the CBS message is mandatory, optional, or advised. In some implementations, the controller is configured to: in response to the type indicating that the CBS message is mandatory, enable the transceiver to receive the further CBS message; and in response to the type indicating that the CBS message is optional or advised, determine whether to receive the further CBS message based on at least one of the following: content in the CBS message, a power consumption of the terminal device, or a preference setting of the terminal device.

In some implementations, the controller is configured to: extract content from the CBS message; and identify, based on the extracted content, a broadcast event carried by the CBS message as the attribute of the CBS message. In some implementations, the controller is configured to: in response to the broadcast event being an emergency event, enable the transceiver to receive the further CBS message; and in response to the broadcast event being an advertising event, determine whether to receive the further CBS message based on at least one of the following: a type of the CBS message, a power consumption of the terminal device, and a preference setting of the terminal device.

In some implementations, the controller is configured to determine, as the attribute of the CBS message, a time interval for receiving a subsequent duplicate of the CBS message. In some implementations, the controller is configured to: in response to that the CBS message is mandatory, determine the time interval with a length below a predetermined threshold; and in response to that the CBS message is optional or advised, determine the time interval with the length exceeding a predetermined threshold. In some implementations, the controller is configured to enable the transceiver to receive the further CBS message according to the time interval.

The subject matter described herein may be embodied as a computer program product being tangibly stored on a non-transient machine-readable medium and comprising machine-executable instructions. The instructions, when executed by a terminal device, cause the terminal device to: receive a Cell Broadcast Service (CBS) message from a network device; determine an attribute of the CBS message; and determine, based on the attribute, a policy for receiving a further CBS message.

In some implementations, the instructions, when executed by the terminal device, further cause the terminal device to: determine a type of the CBS message, the type indicating that the CBS message is mandatory, optional, or advised; identify a broadcast event carried by the CBS message based on content extracted from the CBS message; or determine a time interval for receiving a subsequent duplicate of the CBS message.

In some implementations, the instructions, when executed by the terminal device, further cause the terminal device to: in response to the type indicating that the CBS message is mandatory, enable receiving the further CBS message; and in response to the type indicating that the CBS message is optional or advised, determine whether to receive the further CBS message based on at least one of the following: content in the CBS message, a power consumption of the terminal device, or a preference setting of the terminal device.

In some implementations, the instructions, when executed by the terminal device, further cause the terminal device to: in response to the broadcast event being an emergency event, enable receiving the further CBS message; and in response to the broadcast event being an advertising event, determine whether to receive the further CBS message based on at least one of the following: a type of the CBS message, a power consumption of the terminal device, and a preference setting of the terminal device.

Implementations of the subject matter described herein may further include one or more computer program products being tangibly stored on a non-transient machine-readable medium and comprising machine-executable instructions. The instructions, when executed on a device, causing the device to carry out one or more processes as described above.

Example implementations may be implemented in hardware or special purpose circuits, software, logic or any combination thereof. Some aspects may be implemented in hardware, while other aspects may be implemented in firmware or software which may be executed by a controller, microprocessor or other computing device. While various aspects of the example implementations of the subject matter described herein are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

In the context of the subject matter described herein, a machine readable medium may be any tangible medium that can contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Computer program code for carrying out methods of the subject matter described herein may be written in any combination of one or more programming languages. These computer program codes may be provided to a processor of a general purpose computer, special purpose computer, or other programmable data processing apparatus, such that the program codes, when executed by the processor of the computer or other programmable data processing apparatus, cause the functions or operations specified in the flowcharts and/or block diagrams to be implemented. The program code may execute entirely on a computer, partly on the computer, as a stand-alone software package, partly on the computer and partly on a remote computer or entirely on the remote computer or server.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of any disclosure or of what may be claimed, but rather as descriptions of features that may be specific to particular implementations of particular disclosures. Certain features that are described in this specification in the context of separate implementations can also be implemented in combination in a single implementation. Conversely, various features that are described in the context of a single implementation can also be implemented in multiple implementations separately or in any suitable sub-combination.

Various modifications, adaptations to the foregoing example implementations of this disclosure may become apparent to those skilled in the relevant arts in view of the foregoing description, when read in conjunction with the accompanying drawings. Any and all modifications will still fall within the scope of the non-limiting and example implementations of this disclosure. Furthermore, other implementations of the disclosures set forth herein will come to mind to one skilled in the art to which these implementations of the disclosure pertain having the benefit of the teachings presented in the foregoing descriptions and the drawings.

Therefore, it will be appreciated that the implementations of the disclosure are not to be limited to the specific implementations disclosed and that modifications and other implementations are intended to be included within the scope of the appended claims. Although specific terms are used herein, they are used in a generic and descriptive sense only and not for purposes of limitation.

## Claims

1. A method implemented at a terminal device, comprising:
receiving (210) a Cell Broadcast Service, CBS,
message from a network device;
determining (220) an attribute of the CBS message; and
determining, (230) based on the attribute, a policy for receiving a further CBS message;
wherein the determining an attribute of the CBS message comprises:
determining (320) a type of the CBS message, the type indicating that the CBS message is mandatory, optional, or advised; and
wherein the determining a policy for receiving a further CBS message comprises:
in response to the type indicating that the CBS message is mandatory (330), enabling (340) the terminal device to receive the further CBS message; and
in response to the type indicating that the CBS message is optional or advised (350), determining (370) whether to receive the further CBS message based on at least one of the following:
a power consumption of the terminal device, or
a preference setting of the terminal device.

2. The method of claim 1, wherein the determining an attribute of the CBS message comprises:
extracting (420) content from the CBS message; and
identifying (430) a broadcast event carried by the CBS message based on the extracted content.

3. The method of claim 2, wherein the determining a policy for receiving a further CBS message comprises:
in response to the broadcast event being an emergency event (440), enabling the terminal device to receive the further CBS message; and
in response to the broadcast event being an advertising event (460), determining whether to receive the further CBS message based on at least one of the following:
a type of the CBS message,
a power consumption of the terminal device, and
a preference setting of the terminal device.

4. The method of claim 1, wherein the determining an attribute of the CBS message comprises:
determining (520) a time interval for receiving a subsequent duplicate of the CBS message.

5. The method of claim 4, wherein the determining a time interval for receiving a subsequent duplicate of the CBS message comprises:
in response to that the CBS message is mandatory, determining the time interval with a length below a predetermined threshold; and
in response to that the CBS message is optional or advised, determining the time interval with the length exceeding a predetermined threshold.

6. The method of claim 5, wherein the determining a policy for receiving a further CBS message comprises:
enabling (530) the terminal device to receive the further CBS message according to the time interval.

7. A terminal device (110) comprising:
a receiver configured to receive a Cell Broadcast Service, CBS, message (101) from a network device (120); and
a controller (620) configured to:
determine an attribute of the CBS message (101); and
determine, based on the attribute, a policy for receiving a further CBS message;
wherein the controller (620) is configured to determine a type of the CBS message (101) as the attribute of the CBS message, the type indicating that the CBS message (101) is mandatory, optional, or advised; and
in response to the type indicating that the CBS message (101) is mandatory, enable the transceiver to receive the further CBS message; and
in response to the type indicating that the CBS message (101) is optional or advised, determine whether to receive the further CBS message based on at least one of the following:
a power consumption of the terminal device, or
a preference setting of the terminal device.

8. The terminal device (110) of claim 7, wherein the controller (620) is configured to:
extract content from the CBS message (101); and
identify, based on the extracted content, a broadcast event carried by the CBS message (101) as the attribute of the CBS message (101).

9. The terminal device (110) of claim 8, wherein the controller (620) is configured to:
in response to the broadcast event being an emergency event, enable the transceiver to receive the further CBS message; and
in response to the broadcast event being an advertising event, determine whether to receive the further CBS message based on at least one of the following:
a type of the CBS message (101),
a power consumption of the terminal device, and
a preference setting of the terminal device.

10. The terminal device (110) of claim 7, wherein the controller (620) is configured to determine, as the attribute of the CBS message (101), a time interval for receiving a subsequent duplicate of the CBS message (101).

11. The terminal device (110) of claim 10, wherein the controller (620) is configured to:
in response to that the CBS message (101) is mandatory, determine the time interval with a length below a predetermined threshold; and
in response to that the CBS message (101) is optional or advised, determine the time interval with the length exceeding a predetermined threshold.

12. The terminal device (110) of claim 10, wherein the controller (620) is configured to enable the transceiver to receive the further CBS message according to the time interval.

13. A computer program product being tangibly stored on a non-transient machine-readable medium and comprising machine-executable instructions, the instructions, when executed by a terminal device, causing the terminal device to:
receive a Cell Broadcast Service, CBS,
message from a network device;
determine an attribute of the CBS message; and
determine, based on the attribute, a policy for receiving a further CBS message;
wherein the instructions, when executed by the terminal device, further cause the terminal device to:
determine a type of the CBS message, the type indicating that the CBS message is mandatory, optional, or advised; and
in response to the type indicating that the CBS message is mandatory, enable receiving the further CBS message; and
in response to the type indicating that the CBS message is optional or advised, determine whether to receive the further CBS message based on at least one of the following:
a power consumption of the terminal device, or
a preference setting of the terminal device.

14. The computer program product of claim 13, wherein the instructions, when executed by the terminal device, further cause the terminal device to:
in response to the broadcast event being an emergency event, enable receiving the further CBS message; and
in response to the broadcast event being an advertising event, determine whether to receive the further CBS message based on at least one of the following:
a type of the CBS message,
a power consumption of the terminal device, and
a preference setting of the terminal device.

## Patentansprüche

1. An einer Terminalvorrichtung implementiertes Verfahren, das Folgendes umfasst:
das Empfangen (210) einer Nachricht eines Zellrundfunkdienstes, CBS, von einer Netzwerkvorrichtung;
das Bestimmen (220) eines Attributs der CBS-Nachricht und
das auf dem Attribut basierende Bestimmen (230) einer Richtlinie zum Empfangen einer weiteren CBS-Nachricht; wobei das Bestimmen eines Attributs der CBS-Nachricht Folgendes umfasst:
das Bestimmen (320) eines Typs der CBS-Nachricht, wobei der Typ angibt, dass die CBS-Nachricht erforderlich, optional oder empfohlen ist; und
wobei das Bestimmen einer Richtlinie für das Empfangen einer weiteren CBS-Nachricht Folgendes umfasst:
als Reaktion auf den Typ, der angibt, dass die CBS-Nachricht erforderlich ist (330), das Ermöglichen (340), dass die Terminalvorrichtung die weitere CBS-Nachricht empfängt; und
als Reaktion auf den Typ, der angibt, dass die CBS-Nachricht optional oder empfohlen ist (350), basierend auf wenigstens einem des Folgenden das Bestimmen (370), ob die weitere CBS-Nachricht zu empfangen ist:
einem Stromverbrauch der Terminalvorrichtung oder
einer Präferenzeinstellung der Terminalvorrichtung.

2. Verfahren nach Anspruch 1, wobei das Bestimmen eines Attributs der CBS-Nachricht Folgendes umfasst:
das Extrahieren (420) von Inhalt aus der CBS-Nachricht und
das Erkennen (430) eines von der CBS-Nachricht übertragenen Sendungsereignisses basierend auf dem extrahierten Inhalt.

3. Verfahren nach Anspruch 2, wobei das Bestimmen einer Richtlinie für das Empfangen einer weiteren CBS-Nachricht Folgendes umfasst:
als Reaktion darauf, dass das Sendungsereignis ein Notfallereignis ist (440), das Ermöglichen, dass die Terminalvorrichtung die weitere CBS-Nachricht empfängt; und
als Reaktion darauf, dass das Sendungsereignis ein Werbeereignis (460) ist, das Bestimmen basierend auf wenigstens einem des Folgenden, ob die weitere CBS-Nachricht zu empfangen ist:
einem Typ der CBS-Nachricht,
einem Stromverbrauch der Terminalvorrichtung und
einer Präferenzeinstellung der Terminalvorrichtung.

4. Verfahren nach Anspruch 1, wobei das Bestimmen eines Attributs der CBS-Nachricht Folgendes umfasst:
das Bestimmen (520) eines Zeitintervalls für das Empfangen eines nachfolgenden Duplikats der CBS-Nachricht.

5. Verfahren nach Anspruch 4, wobei das Bestimmen eines Zeitintervalls für das Empfangen eines nachfolgenden Duplikats der CBS-Nachricht Folgendes umfasst:
als Reaktion darauf, dass die CBS-Nachricht erforderlich ist, das Bestimmen des Zeitintervalls mit einer Länge unterhalb einer vorbestimmten Schwelle und
als Reaktion darauf, dass die CBS-Nachricht optional oder empfohlen ist, das Bestimmen des Zeitintervalls mit der eine vorbestimmte Schwelle überschreitenden Länge.

6. Verfahren nach Anspruch 5, wobei das Bestimmen einer Richtlinie für das Empfangen einer weiteren CBS-Nachricht Folgendes umfasst:
das Ermöglichen (530), dass die Terminalvorrichtung die weitere CBS-Nachricht gemäß dem Zeitintervall empfängt.

7. Terminalvorrichtung (110), die Folgendes umfasst:
einen Empfänger, der so ausgebildet ist, dass er eine Nachricht (101) eines Zellrundfunkdienstes, CBS, von einer
Netzwerkvorrichtung (120) empfängt und
eine Steuerung (620), die so ausgebildet ist, dass sie: ein Attribut der CBS-Nachricht (101) bestimmt und basierend auf dem Attribut eine Richtlinie für das Empfangen einer weiteren CBS-Nachricht bestimmt;
wobei die Steuerung (620) so ausgebildet ist, dass sie einen Typ der CBS-Nachricht (101) als Attribut der CBS-Nachricht bestimmt, wobei der Typ darauf hindeutet, dass die CBS-Nachricht (101) erforderlich, optional oder empfohlen ist; und
als Reaktion auf den Typ, der angibt, dass die CBS-Nachricht (101) erforderlich ist, dem Transceiver ermöglicht, die weitere CBS-Nachricht zu empfangen; und
als Reaktion auf den Typ, der angibt, dass die CBS-Nachricht (101) optional oder empfohlen ist, basierend auf wenigstens einem des Folgenden zu bestimmen, ob die weitere CBS-Nachricht zu empfangen ist:
einem Stromverbrauch der Terminalvorrichtung oder einer Präferenzeinstellung der Terminalvorrichtung.

8. Terminalvorrichtung (110) nach Anspruch 7, wobei die Steuerung (620) so ausgebildet ist, dass sie:
Inhalt aus der CBS-Nachricht (101) extrahiert und
basierend auf dem extrahierten Inhalt ein Sendungsereignis erkennt, das von der CBS-Nachricht (101) als Attribut der CBS-Nachricht (101) übertragen wird.

9. Terminalvorrichtung (110) nach Anspruch 8, wobei die Steuerung (620) so ausgebildet ist, dass sie:
als Reaktion darauf, dass das Sendungsereignis ein Notfallereignis ist, dem Transceiver ermöglicht, die weitere CBS-Nachricht zu empfangen; und
als Reaktion darauf, dass das Sendungsereignis ein Werbeereignis ist, basierend auf wenigstens einem des Folgenden zu bestimmen, ob die weitere CBS-Nachricht zu empfangen ist:
einem Typ der CBS-Nachricht (101),
einem Stromverbrauch der Terminalvorrichtung und
einer Präferenzeinstellung der Terminalvorrichtung.

10. Terminalvorrichtung (110) nach Anspruch 7, wobei die Steuerung (620) so ausgebildet ist, dass sie als Attribut der CBS-Nachricht (101) ein Zeitintervall für das Empfangen eines anschließenden Duplikats der CBS-Nachricht (101) bestimmt.

11. Terminalvorrichtung (110) nach Anspruch 10, wobei die Steuerung (620) so ausgebildet ist, dass sie:
als Reaktion darauf, dass die CBS-Nachricht (101) erforderlich ist, das Zeitintervall mit
einer Länge unterhalb einer vorbestimmten Schwelle bestimmt und
als Reaktion darauf, dass die CBS-Nachricht (101) optional oder empfohlen ist, das Zeitintervall mit der eine vorbestimmte Schwelle überschreitenden Länge bestimmt.

12. Terminalvorrichtung (110) nach Anspruch 10, wobei die Steuerung (620) so ausgebildet ist, dass sie dem Transceiver ermöglicht, die weitere CBS-Nachricht gemäß dem Zeitintervall zu empfangen.

13. Computerprogrammprodukt, das auf einem nichtflüchtigen maschinenlesbaren Medium dinglich gespeichert ist und maschinenausführbare Anweisungen umfasst, wobei die Anweisungen, wenn sie von einer Terminalvorrichtung ausgeführt werden, bewirken, dass die Terminalvorrichtung:
eine Zellrundfunkdienst-, CBS-,
Nachricht von einer Netzwerkvorrichtung empfängt;
ein Attribut der CBS-Nachricht bestimmt und
basierend auf dem Attribut eine Richtlinie für das Empfangen einer weiteren CBS-Nachricht bestimmt;
wobei die Anweisungen, wenn sie von der Terminalvorrichtung ausgeführt werden, weiterhin bewirken, dass die Terminalvorrichtung:
einen Typ der CBS-Nachricht bestimmt, wobei der Typ angibt, dass die CBS-Nachricht erforderlich, optional oder empfohlen ist; und
als Reaktion auf den Typ, der angibt, dass die CBS-Nachricht erforderlich ist, das Empfangen der weiteren CBS-Nachricht ermöglicht; und
als Reaktion auf den Typ, der angibt, dass die CBS-Nachricht optional oder empfohlen ist, basierend auf wenigstens einem des Folgenden bestimmt, ob die weitere CBS-Nachricht zu empfangen ist:
einem Stromverbrauch der Terminalvorrichtung oder
einer Präferenzeinstellung der Terminalvorrichtung.

14. Computerprogrammprodukt nach Anspruch 13, wobei die Anweisungen, wenn sie von der Terminalvorrichtung ausgeführt werden, weiterhin bewirken, dass die Terminalvorrichtung:
als Reaktion darauf, dass das Sendungsereignis ein Notfallereignis ist, das Empfangen der weiteren CBS-Nachricht ermöglicht; und
als Reaktion darauf, dass das Sendungsereignis ein Werbeereignis ist, basierend auf wenigstens einem des Folgenden zu bestimmen, ob die weitere CBS-Nachricht zu empfangen ist:
einem Typ der CBS-Nachricht,
einem Stromverbrauch der Terminalvorrichtung und
einer Präferenzeinstellung der Terminalvorrichtung.

## Revendications

1. Procédé implémenté à un dispositif terminal, comprenant les étapes consistant à :
recevoir (210) un message de Cell Broadcast Service, CBS, provenant d'un dispositif réseau ;
déterminer (220) un attribut du message de CBS ; et
déterminer (230) sur la base de l'attribut, une politique de réception d'un autre message de CBS ;
dans lequel la détermination d'un attribut du message de CBS comprend les étapes consistant à :
déterminer (320) un type de message de CBS, le type indiquant que le message de CBS est obligatoire, optionnel ou conseillé ; et
dans lequel la détermination d'une politique de réception d'un autre message de CBS comprend les étapes consistant à :
en réponse au type indiquant que le message de CBS est obligatoire (330), permettre (340) au dispositif terminal de recevoir l'autre message de CBS ; et
en réponse au type indiquant que le message de CBS est optionnel ou conseillé (350), déterminer (370) la réception ou non de l'autre message de CBS sur la base d'au moins l'un des éléments suivants :
une consommation d'énergie du dispositif terminal, ou
un réglage de préférence du dispositif terminal.

2. Procédé selon la revendication 1, dans lequel la détermination d'un attribut du message de CBS comprend les étapes consistant à :
extraire (420) du contenu du message de CBS ; et
identifier (430) un événement de diffusion porté par le message de CBS sur la base du contenu extrait.

3. Procédé selon la revendication 2, dans lequel la détermination d'une politique de réception d'un autre message de CBS comprend les étapes consistant à :
en réponse au fait que l'événement de diffusion est un événement d'urgence (440), permettre au dispositif terminal de recevoir l'autre message de CBS ; et
en réponse au fait que l'évènement de diffusion est un événement de publicité (460), déterminer la réception ou non de l'autre message de CBS sur la base d'au moins l'un des éléments suivants :
un type de message de CBS,
une consommation d'énergie du dispositif terminal, et
un réglage de préférence du dispositif terminal.

4. Procédé selon la revendication 1, dans lequel la détermination d'un attribut du message de CBS comprend les étapes consistant à :
déterminer (520) un intervalle de temps pour la réception d'une copie ultérieure du message de CBS.

5. Procédé selon la revendication 4, dans lequel la détermination d'un intervalle de temps pour la réception d'une copie ultérieure du message de CBS comprend les étapes consistant à :
en réponse au fait que le message de CBS est obligatoire, déterminer l'intervalle de temps avec une longueur inférieure à un seuil prédéterminé ; et
en réponse au fait que le message de CBS est optionnel ou conseillé, déterminer l'intervalle de temps avec une longueur supérieure à un seuil prédéterminé.

6. Procédé selon la revendication 5, dans lequel la détermination d'une politique de réception d'un autre message de CBS comprend les étapes consistant à :
permettre (530) au dispositif terminal de recevoir l'autre message de CBS selon l'intervalle de temps.

7. Dispositif terminal (110) comprenant :
un récepteur configuré pour recevoir un message de Cell Broadcast Service, CBS (101) d'un dispositif réseau (120) ; et
un dispositif de commande (620) configuré pour :
déterminer un attribut du message de CBS (101) ; et
déterminer, sur la base de l'attribut, une politique de réception d'un autre message de CBS ;
dans lequel le dispositif de commande (620) est configuré pour déterminer un type de message de CBS (101) en tant que l'attribut du message de CBS, le type indiquant que le message de CBS (101) est obligatoire, optionnel, ou conseillé ; et
en réponse au type indiquant que le message de CBS (101) est obligatoire, permettre à l'émetteur-récepteur de recevoir l'autre message de CBS ; et
en réponse au type indiquant que le message de CBS (101) est optionnel ou conseillé, déterminer la réception ou non de l'autre message de CBS sur la base d'au moins l'un des éléments suivants :
une consommation d'énergie du dispositif terminal, ou
un réglage de préférence du dispositif terminal.

8. Dispositif terminal (110) selon la revendication 7, dans lequel le dispositif de commande (620) est configuré pour :
extraire du contenu du message de CBS (101) ; et
identifier, sur la base du contenu extrait, un événement de diffusion porté par le message de CBS (101) en tant qu'attribut du message de CBS (101).

9. Dispositif terminal (110) selon la revendication 8, dans lequel le dispositif de commande (620) est configuré pour :
en réponse au fait que l'évènement de diffusion est un événement d'urgence, permettre à l'émetteur-récepteur de recevoir l'autre message de CBS ; et
en réponse au fait que l'évènement de diffusion est un événement de publicité, déterminer la réception ou non de l'autre message de CBS sur la base d'au moins l'un des éléments suivants :
un type de message de CBS (101),
une consommation d'énergie du dispositif terminal, et
un réglage de préférence du dispositif terminal.

10. Dispositif terminal (110) selon la revendication 7, dans lequel le dispositif de commande (620) est configuré pour déterminer, en tant que l'attribut du message de CBS (101), un intervalle de temps pour la réception d'une copie ultérieure du message de CBS (101).

11. Dispositif terminal (110) selon la revendication 10, dans lequel le dispositif de commande (620) est configuré pour :
en réponse au fait que le message de CBS (101) est obligatoire, déterminer l'intervalle de temps avec une longueur inférieure à un seuil prédéterminé ; et
en réponse au fait que le message de CBS (101) est optionnel ou conseillé, déterminer l'intervalle de temps dont la longueur est supérieure à un seuil prédéterminé.

12. Dispositif terminal (110) selon la revendication 10, dans lequel le dispositif de commande (620) est configuré pour permettre à l'émetteur-récepteur de recevoir l'autre message de CBS selon l'intervalle de temps.

13. Produit de programme informatique étant stocké tangiblement sur un support non transitoire lisible par machine et comprenant des instructions exécutables par machine, les instructions, lorsqu'elles sont exécutées par un dispositif terminal, amenant le dispositif terminal à :
recevoir un message de Cell Broadcast Service, CBS, d'un dispositif réseau ;
déterminer un attribut du message de CBS ; et
déterminer, sur la base de l'attribut, une politique de réception d'un autre message de CBS ;
dans lequel les instructions, lorsqu'elles sont exécutées par le dispositif terminal, amènent en outre le dispositif terminal à :
déterminer un type du message de CBS, le type indiquant que le message de CBS est obligatoire, optionnel, ou conseillé ; et
en réponse au type indiquant que le message de CBS est obligatoire, permettre la réception de l'autre message de CBS ; et
en réponse au type indiquant que le message de CBS est optionnel ou conseillé, déterminer la réception ou non de l'autre message de CBS sur la base d'au moins l'un des éléments suivants :
une consommation d'énergie du dispositif terminal, ou
un réglage de préférence du dispositif terminal.

14. Produit de programme informatique selon la revendication 13, dans lequel les instructions, lorsqu'elles sont exécutées par le dispositif terminal, amènent en outre le dispositif terminal à :
en réponse au fait que l'évènement de diffusion est un événement d'urgence, déterminer la réception de l'autre message de CBS ; et
en réponse au fait que l'évènement de diffusion est un événement de publicité, déterminer la réception ou non de l'autre message de CBS sur la base d'au moins l'un des éléments suivants :
un type de message de CBS,
une consommation d'énergie du dispositif terminal, et
un réglage de préférence du dispositif terminal.
